# EUROPÄISCHE PATENTANMELDUNG

(11) **EP 4 520 161 A1**
(43) Veröffentlichungstag der Anmeldung: **12.03.2025**
(21) Anmeldenummer: 24193832.3
(22) Anmeldetag: 09.08.2024
(51) Int. Cl.: A01F 15/12, A01D 59/06

(54) **BINDENADEL FÜR EINE NADELSCHWINGE EINER BALLENPRESSE**

(30) Priorität: 06.09.2023 DE 102023124000
(71) Anmelder: Maschinenfabrik Bernard Krone GmbH & Co. KG, 48480 Spelle (DE)
(72) Erfinder: Spieker, Jörg, 49497 Mettingen (DE)

(57) **Zusammenfassung**

Die Erfindung betrifft eine Bindenadel (20) für eine Nadelschwinge (15) einer Ballenpresse (1), wobei die Bindenadel (20) ein Befestigungselement (21) zur Befestigung an einem Schwingenträger (16) der Nadelschwinge (15) aufweist, ein Führungselement (22) zum wenigstens indirekten Führen eines strangförmigen Bindemittels (40), und einen Nadelkörper (23) aus Metall, der sich vom Befestigungselement (21) zum Führungselement (22) erstreckt und wenigstens abschnittsweise bogenartig entlang einer Krümmungsebene (K) verläuft, wodurch eine bogeninnere Innenseite (36) und eine bogenäußere Außenseite (37) der Bindenadel (20) definiert sind. Um eine effizient herstellbare Bindenadel zur Verfügung zu stellen, ist erfindungsgemäß vorgesehen, dass der Nadelkörper (23) wenigstens teilweise durch ein Rohrprofil (24) gebildet ist, welches einen Profilinnenraum (35) definiert.

## Beschreibung

Die vorliegende Erfindung betrifft eine Bindevorrichtung für eine Nadelschwinge einer Ballenpresse nach dem Oberbegriff von Anspruch 1, eine Ballenpresse nach dem Oberbegriff von Anspruch 10, sowie ein Verfahren nach Anspruch 11.

Ballenpressen werden in der Landwirtschaft eingesetzt, um Erntegut wie zum Beispiel Heu oder Stroh, welches zuvor aufgenommen wurde, zu Ballen zu verpressen. Das Erntegut wird normalerweise durch eine Pick-up, die in die Ballenpresse integriert ist, vom Boden aufgenommen. Im Falle einer Quaderballenpresse erfolgt das Verpressen des aufgesammelten Ernteguts in zwei Stufen. Zunächst wird das von der Pick-up übernommene und gegebenenfalls durch eine Schneidvorrichtung geschnittene Erntegut durch eine Fördervorrichtung bzw. Sammelvorrichtung innerhalb einer Sammelkammer weitergefördert und dabei gerafft bzw. vorverdichtet. Der Sammelkammer ist eine Presskammer oder ein Presskanal nachgeordnet. Dort wirkt ein oszillierender Presskolben auf das Erntegut ein und führt das eigentliche Verpressen durch. Es wird somit vorverdichtetes Erntegut portionsweise in den Presskanal überführt, wo ein sukzessiver Aufbau des Quaderballens erfolgt.

Wenn der Quaderballen eine vorgesehene Größe erreicht hat, wird er mittels eines Bindematerials oder Bindemittels gebunden, bevor er ausgeworfen wird. Bei dem Bindemittel kann es sich zum Beispiel um ein thermoplastisches Band handeln oder aber um ein Garn. Beispielsweise bei einem Einfachknoter sieht ein bekannter Bindevorgang vor, dass ein Endbereich des Bindemittels an einem Ende des Ballens an dessen Oberseite festgehalten wird, wobei der Bindemittelstrang entlang der Oberseite zum gegenüberliegenden Ende, danach abwärts und anschließend in entgegengesetzter Richtung unterhalb des Ballens zurückgeführt ist. Ein sich anschließender Abschnitt des Bindemittelstrangs wird von einer Bindenadel geführt. Dabei sind eine Mehrzahl von Bindenadeln an einer Nadelschwinge befestigt, die gegenüber dem Presskanal beweglich angeordnet ist. Gegen Ende der Ballenbildung führt die Bindenadel den Strangabschnitt durch den Presskanal nach oben, wo er mit dem oben genannten Endbereich verbunden werden kann. Es sind auch andere Arten von Bindevorgängen bekannt, wobei allerdings stets eine Nadelschwinge mit Bindenadeln dazu dient, Bindemittel durch den Presskanal zu führen. Aufgrund der kurzen Taktzeiten und der zum Teil erheblichen Höhe des Presskanals (zum Beispiel zwischen 70 cm und 130 cm) muss die Nadelschwinge schnell bewegt werden. Dementsprechend werden die Bindenadeln erheblichen Beschleunigungskräften sowie hiermit verbundenen Biegemomenten ausgesetzt. Um diesen zu widerstehen, muss die einzelne Bindenadel eine ausreichende Stabilität und Steifigkeit aufweisen. Andererseits muss sie aufgrund des verfügbaren Bauraums vergleichsweise schmal dimensioniert sein und soll eine möglichst geringe Masse aufweisen, um die Trägheit der Nadelschwinge zu minimieren. Bekannte Bindenadeln werden zum Beispiel aus einer Mehrzahl von Blechteilen gebildet, die durch Schweißen miteinander verbunden werden. Zum einen sind Herstellung und Verschweißen der einzelnen Teile aufwändig, zum anderen entstehen durch jede Schweißnaht thermische Verformungen, die nachträglich gerichtet werden müssen.

Aufgabe der Erfindung ist es, eine effizient herstellbare Bindenadel zur Verfügung zu stellen.

Die Aufgabe wird gelöst mit einer Bindenadel für eine Nadelschwinge einer Ballenpresse, mit den Merkmalen des unabhängigen Patentanspruchs 1. Vorteilhafte Ausführungsformen sind den abhängigen Ansprüchen entnehmbar.

Dafür wird eine Bindenadel für eine Nadelschwinge einer Ballenpresse geschaffen, wobei die Bindenadel ein Befestigungselement zur Befestigung an einem Schwingenträger der Nadelschwinge aufweist, ein Führungselement zum wenigstens indirekten Führen eines strangförmigen Bindemittels, und einen Nadelkörper aus Metall, der sich vom Befestigungselement zum Führungselement erstreckt und wenigstens abschnittsweise bogenartig entlang einer Krümmungsebene verläuft, wodurch eine bogeninnere Innenseite und eine bogenäußere Außenseite der Bindenadel definiert sind.

Bei der Ballenpresse kann es sich insbesondere um eine Strangpresse wie beispielsweise eine Quaderballenpresse, eine Hochdruckpresse oder eine Großpackenpresse handeln. Die Ballenpresse kann selbstfahrend mit eigenem Fahrantrieb oder als Anhänger ohne eigenen Fahrantrieb oder stationär ausgebildet sein. Sie weist einen Presskanal auf, in welchem die eigentliche Ballenformung und der Pressvorgang erfolgen. Der Presskanal weist eine Kanallängsachse auf, zu welcher er normalerweise wenigstens überwiegend parallel verläuft. Die Kanallängsachse kann mit einer Längsachse der Ballenpresse übereinstimmen, sie kann aber auch gegenüber derselben geneigt sein. Typischerweise ist im Presskanal ein Presskolben angeordnet, der dazu eingerichtet ist, durch eine oszillierende Bewegung auf das Erntegut einzuwirken und es so zu verpressen. Hinsichtlich des Erntegutflusses ist dem Presskanal in der Regel eine Sammelkammer vorgeschaltet, in welcher eine Fördervorrichtung oder Sammelvorrichtung dazu eingerichtet ist, das Erntegut weiterzufördern und dabei vorzuverdichten.

Um die Form des fertigen Ballens zu sichern, wird er innerhalb des Presskanals mit einem Bindemittel versehen. Bei dem Bindemittel, welches auch als Bindematerial bezeichnet werden kann, kann es sich insbesondere um ein Garn (zum Beispiel aus einer Naturfaser wie Sisal oder einem Kunststoff wie PP) oder ein thermoplastisches Band handeln (zum Beispiel aus PET). Das Bindemittel wird normalerweise in einer Mehrzahl von separaten Schleifen, die quer zur Kanallängsachse beabstandet sind, um den Ballen gelegt. Die Schleifen werden im Fall von Garn durch Verknoten geschlossen, im Fall eines thermoplastischen Bandes durch Verschweißen. In jedem Fall erfolgt ein Umhüllen des Erntegutballens mit Bindemittel. Hierzu muss ein Abschnitt des strangförmigen Bindemittels in den Presskanal und insbesondere durch den Presskanal hindurchgeführt werden, wonach eine Verbindung mit einem anderen Abschnitt strangförmigen Bindemittels hergestellt werden kann. Das Einführen bzw. Hindurchführen des Bindemittels erfolgt durch eine Nadelschwinge, die eine Mehrzahl von Bindenadeln aufweist. In der Regel ist für jede Schleife eine eigene Bindenadel vorgesehen, so dass die Nadelschwinge eine entsprechende Anzahl (zum Beispiel zwischen zwei und acht) Bindenadeln aufweisen kann. Die Nadelschwinge selbst ist bevorzugt um eine Schwingenachse schwenkbar, die parallel zur Querachse der Ballenpresse verläuft. Dementsprechend entspricht die Bewegung der einzelnen Bindenadeln ebenfalls einem Schwenkvorgang.

Die Bindenadel weist ein Befestigungselement zur Befestigung an einem Schwingenträger der Nadelschwinge auf. Der Schwingenträger kann sich parallel zur Schwingenachse erstrecken und kann zur Anbindung sämtlicher Bindenadeln dienen. Er kann von der Schwingenachse beabstandet sein und kann mit Schwingenarmen verbunden sein, die sich bis zur Schwingenachse erstrecken. Das Befestigungselement ist in montiertem Zustand am Schwingenträger befestigt, entweder lösbar oder nicht-lösbar. Sofern eine lösbare Befestigung vorgesehen ist, kann das Befestigungselement eine Mehrzahl von Bohrungen zur Aufnahme von Verbindungsmitteln wie Schrauben aufweisen. Das Befestigungselement stellt die Anbindung zum Schwingenträger her und muss daher ausreichend stabil ausgebildet sein. Es besteht daher bevorzugt aus Metall, insbesondere Stahl. Es kann auch als Fußelement oder Nadelfuß bezeichnet werden.

Des Weiteren weist die Bindenadel ein Führungselement auf, zum wenigstens indirekten Führen des strangförmigen Bindemittels. Wie bereits oben erwähnt, kann das Bindemittel nicht nur in den Presskanal, sondern durch diesen hindurch zur gegenüberliegenden Seite - normalerweise der Oberseite - geführt werden. Über das Führungselement ist die Bindenadel in Kontakt mit dem Bindemittel. Dabei kann das Führungselement im Betriebszustand das Bindemittel direkt führen, also direkt mit dem Bindemittel in Kontakt stehen. Es kann das Bindemittel aber auch indirekt führen, über ein zwischengeordnetes Element. Ein derartiges zwischengeordnetes Element kann zum Beispiel eine Führungsrolle sein, über die ein Bindemittelstrang läuft und die am Führungselement drehbar gelagert ist. Andererseits kann die Führungsrolle auch als Teil des Führungselements betrachtet werden. Insofern kann das Führungselement auch aus einer Mehrzahl von Einzelteilen bestehen. Das Führungselement kann insbesondere dazu eingerichtet sein, in Richtung der Schwingenachse einen beiderseitigen Formschluss mit dem Bindemittel zu bilden, so dass dessen Position insoweit festgelegt ist. Darüber hinaus ist allerdings auch ein wenigstens teilweiser Formschluss quer zur Schwingenachse nötig, um das Bindemittel in und/oder durch den Presskanal zu führen. Das Führungselement kann wenigstens teilweise aus Metall, insbesondere Stahl, bestehen. Allerdings könnte zum Beispiel die genannte Führungsrolle auch wenigstens teilweise aus Kunststoff bestehen.

Des Weiteren weist die Bindenadel einen Nadelkörper aus Metall auf, der sich vom Befestigungselement zum Führungselement erstreckt und wenigstens abschnittsweise bogenartig entlang einer Krümmungsebene verläuft, wodurch eine bogeninnere Innenseite und eine bogenäußere Außenseite der Bindenadel definiert sind. Der Nadelkörper kann insbesondere aus Stahl gefertigt sein, wenngleich andere Metalle sowie Legierungen grundsätzlich nicht ausgeschlossen sind. Er erstreckt sich vom Befestigungselement zum Führungselement. Entsprechend verbindet er die genannten Elemente. Im Hinblick auf seine Abmessungen und gegebenenfalls auch auf seine Masse kann der Nadelkörper den überwiegenden Teil der Bindenadel bilden. Eine wesentliche Funktion des Nadelkörpers besteht in der Anbindung des Führungselements an das Befestigungselement und somit im Weitern an den Schwingenträger. Das heißt über den Nadelkörper wird die Bewegung des Schwingenträgers auf das Führungselement und im Weiteren auf das Bindemittel übertragen. Insgesamt kann der Nadelkörper als langgestreckt bezeichnet werden. Allerdings ist er zumindest nicht durchgängig gerade ausgebildet, sondern erstreckt sich wenigstens abschnittsweise bogenartig entlang der Krümmungsebene. Man kann also eine hier als Krümmungsebene bezeichnete Ebene identifizieren, entlang welcher der Nadelkörper ausgerichtet ist. In montiertem Zustand verläuft diese Ebene senkrecht zur Schwingenachse. "Bogenartig" kann insbesondere bedeuten, dass der Nadelkörper gekrümmt ist, so dass man zumindest lokal einen Krümmungsradius zuordnen kann. "Bogenartig" würde allerdings auch eine Abfolge von gegeneinander abgewinkelten Abschnitten des Nadelkörpers einschließen, wobei sich insgesamt eine bogenähnliche Form ergibt, wenngleich jeder Abschnitt in sich gerade ausgebildet ist und zwischen zwei Abschnitten kein Krümmungsradius oder nur ein extrem kleiner Krümmungsradius gegeben ist. Man kann auch davon sprechen, dass der Nadelkörper wenigstens einen Bogenabschnitt aufweist, innerhalb dessen er bogenartig entlang der Krümmungsebene verläuft. Durch die bogenartige Form kann insbesondere erreicht werden, dass sich der Nadelkörper beim Schwenken der Nadelschwinge durch einen räumlich begrenzten Bereich hindurch bewegen kann. Es können somit Kollisionen mit Teilen der Ballenpresse und/oder mit dem Erntegutballen verhindert werden. In montiertem Zustand kann der Nadelkörper wenigstens abschnittsweise tangential zur Schwingenachse verlaufen. Durch den bogenartigen Verlauf lässt sich eine bogenäußere Seite definieren, die in diesem Zusammenhang als Außenseite bezeichnet wird, sowie eine bogeninnere Seite, die in diesem Zusammenhang als Innenseite bezeichnet wird. In montiertem Zustand ist die Innenseite bevorzugt der Schwingenachse zugewandt, während die Außenseite von der Schwingenachse abgewandt ist.

Erfindungsgemäß ist der Nadelkörper wenigstens teilweise durch ein Rohrprofil gebildet, welches einen Profilinnenraum definiert. Insbesondere kann der Nadelkörper innerhalb eines Bogenabschnitts durch das genannte Rohrprofil gebildet sein. Das Rohrprofil kann auch als Hohlprofil, Rohr oder Profilrohr bezeichnet werden, wobei der Begriff "Profil" allgemein zu verstehen ist und sich nicht auf eine bestimmte Art von Profil oder Querschnitt bezieht. Der Querschnitt des Rohrprofils kann durchgehend gleich ausgebildet sein, er kann aber auch bereichsweise unterschiedlich ausgebildet sein. Das Rohrprofil ist bevorzugt einstückig gefertigt, das heißt es besteht aus einem einzigen Stück Metall, welches durch ein oder mehrere Umformprozesse sowie gegebenenfalls Trennprozesse aus einem Halbzeug hergestellt sein kann. Besonderes bevorzugt ist das Rohrprofil wenigstens teilweise durch Kaltumformung hergestellt. Es definiert einen Profilinnenraum, das heißt es begrenzt den entsprechenden Innenraum randseitig umlaufend. Der Profilinnenraum ist bevorzugt leer (abgesehen von darin enthaltener Luft), wenngleich es denkbar wäre, dass er zum Beispiel mit einem Polymerschaum ausgeschäumt ist.

Die Ausgestaltung als Rohrprofil erlaubt zum einen eine hohe Stabilität, was zur Übertragung von Kräften und Drehmomenten zwischen dem Schwingenträger und dem vom Führungselement geführten Bindemittel wesentlich ist, zum anderen kann die Masse gering gehalten werden, was für eine dynamische Bewegung der Nadelschwinge vorteilhaft ist. Besondere Vorteile ergeben sich auch hinsichtlich der Herstellung des Nadelkörpers. Das Rohrprofil kann wie beschrieben durch Umformung in die gewünschte Form gebracht werden, wobei es aufgrund seiner Struktur an sich schon eine gute Stabilität aufweist. Insofern entfallen Trenn- und Verbindungsprozesse (Schneiden, Stanzen, Schweißen, Vernieten etc.), die zum Beispiel notwendig wären, um den Nadelkörper aus einzelnen Blechteilen zu bilden. Somit vereinfacht sich die Herstellung und es kann zudem der Verschnitt minimiert werden. Außerdem wird das Problem thermischer Verformungen, die beim Verschweißen einzelner Metallteile entstehen, zumindest wesentlich reduziert werden, da die Herstellung des Nadelkörpers ohne Schweißvorgang möglich ist.

Der Nadelkörper könnte abschnittsweise zum Beispiel durch ein U-Profil, durch ein massives Element oder andere Elemente gebildet sein. Bevorzugt ist der Nadelkörper allerdings vollständig durch das Rohrprofil gebildet. Er kann somit vollständig aus einem einzigen Stück gefertigt werden, zum Beispiel durch Umformen und gegebenenfalls Beschneiden eines Halbzeugs. Die oben genannten Vorteile hinsichtlich des Herstellungsprozesses werden somit maximal ausgenutzt.

Eine Ausgestaltung sieht vor, dass das Rohrprofil wenigstens abschnittsweise an der Außenseite einen im Querschnitt konkaven Aufnahmeabschnitt aufweist, welcher eine außenseitige Aufnahmerinne für Bindemittel definiert. Die Querschnittsebene verläuft dabei senkrecht zur Krümmungsebene, und insbesondere senkrecht zur lokalen Verlaufsrichtung des Rohrprofils. An der Außenseite ist ein konkaver Aufnahmeabschnitt ausgebildet. "Konkav" bedeutet, dass das Rohrprofil dort nach innen, in Richtung des Profilinnenraums, zurückweicht. Dementsprechend ist dort eine Vertiefung ausgebildet, die rinnenartig geformt ist. Diese Aufnahmerinne erstreckt sich entlang der Außenseite und ist dafür vorgesehen, einen Abschnitt des strangförmigen Bindemittels aufzunehmen. Während eine Kollision zwischen der Bindenadel und dem Erntegutballen oder anderen Teilen der Ballenpresse vermieden werden kann, ist es während eines Bindezyklus oftmals unvermeidbar, dass das Bindemittel in Kontakt mit dem Nadelkörper gerät. In diesem Fall kann sich der Bindemittelstrang kontrolliert in die Aufnahmerinne legen, statt zum Beispiel seitlich vom Nadelkörper abzugleiten und eventuell im weiteren Verlauf beschädigt zu werden. Der Aufnahmeabschnitt sowie die Aufnahmerinne sind bevorzugt wenigstens benachbart zum Führungselement ausgebildet. Die Aufnahmerinne kann sich auch entlang des gesamten Rohrprofils erstrecken, zum Beispiel dann, wenn dessen Querschnitt durchgehend gleich ausgebildet ist. Abgesehen von der Aufnahme- und Führungsfunktion für den Bindemittelstrang kann der Aufnahmeabschnitt aber auch eine strukturelle Stabilisierung des gesamten Rohrprofils bewirken.

Eine weitere Ausgestaltung sieht vor, dass das Rohrprofil wenigstens abschnittsweise an der Innenseite einen im Querschnitt konvexen Rückenabschnitt aufweist. Der Rückenabschnitt kann insgesamt gerundet oder gewölbt ausgebildet sein. Von außen gesehen ist er konvex ausgebildet. Er kann zumindest in einigen Ausführungsformen als U-förmig bezeichnet werden. Er kann in die gleiche Richtung gewölbt sein wie der gegenüberliegend angeordnete Aufnahmeabschnitt. Dabei können beide Abschnitte zusammen eine Art doppeltes U-Profil bilden.

Das Rohrprofil kann zwei einander quer zur Krümmungsebene gegenüberliegende Seitenabschnitte aufweisen, von denen jeder in einem Winkel von höchstens 15° zur Krümmungsebene verläuft. Der Winkel kann weiter höchstens 10° oder höchstens 7° betragen. Das heißt die Seitenabschnitte verlaufen nahezu oder exakt parallel zur Krümmungsebene und somit senkrecht zur Schwingenachse. Die Seitenabschnitte stabilisieren daher den Nadelkörper gegenüber auftretenden Biegemomenten um die Schwingenachse. Derartige Biegemomente können bei der zum Teil hochdynamischen Führung des Bindemittels zum einen aufgrund der Trägheit des Bindemittelstrangs, zum anderen aufgrund der Trägheit der Bindenadel selbst auftreten. Die Seitenabschnitte können sich insbesondere beiderseits des oben genannten Aufnahmeabschnitts und/oder des Rückenabschnitts erstrecken.

Wie bereits oben erwähnt, kann der Nadelkörper vorteilhaft allein durch Umformung (sowie gegebenenfalls Trennen) eines Halbzeugs hergestellt werden. Es ist dabei möglich, dass das Führungselement einstückig mit dem Nadelkörper gefertigt wird, zum Beispiel durch weitere umformende und trennende Bearbeitung des Halbzeugs in einem Endbereich. Dies ist auch für das Befestigungselement denkbar. Es kann allerdings prozesstechnisch aufwändig sein, anhand zum Beispiel eines Stahlrohrs als Halbzeug die genannten Elemente zu formen. Daher kann es vorteilhaft sein, wenn das Führungselement und/oder das Befestigungselement separat vom Nadelkörper gefertigt und an diesem befestigt sind. Das heißt das jeweilige Element wird separat vom Nadelkörper hergestellt, wobei auch ein grundsätzlich anderer Herstellungsprozess zugrunde gelegt werden kann als beim Nadelkörper. Zum Beispiel kann das Element durch Urformen, zum Beispiel Gießen, hergestellt werden, wobei kein oder zumindest kein wesentliches Umformen oder Trennen mehr notwendig ist.

Wenngleich der Nadelkörper für sich genommen bereits eine hohe mechanische Stabilität aufweist, kann es in einigen Ausführungsformen sinnvoll sein, die Bindenadel weiter zu stabilisieren. Insbesondere kann vorgesehen sein, dass die Bindenadel wenigstens ein Verstärkungselement aufweist, welches am Nadelkörper befestigt ist und wenigstens teilweise an dessen Innenseite angeordnet ist. Das wenigstens eine Verstärkungselement kann sich entlang wenigstens eines Drittels oder auch wenigstens entlang der Hälfte des Nadelkörpers erstrecken. Im Falle mehrerer Verstärkungselemente bezieht sich diese Aussage auf deren Gesamterstreckung. Das jeweilige Verstärkungselement ist wenigstens teilweise auf der Innenseite angeordnet und kann mit der Innenseite des Rohrprofils verbunden sein. Zum Beispiel kann es am oben genannten Rückenabschnitt befestigt sein. Es können auch eine Mehrzahl von Verstärkungselementen vorgesehen sein, insbesondere zwei. Diese sind bevorzugt entlang der Erstreckungsrichtung des Rohrprofils aufeinanderfolgend angeordnet, wobei sich ihre Positionen diesbezüglich überschneiden können. Diese Verstärkungselemente können wiederum untereinander verbunden sein. Das wenigstens eine Verstärkungselement ist bevorzugt aus Metall gefertigt, insbesondere aus Stahl. Bevorzugt verläuft das jeweilige Verstärkungselement wenigstens teilweise in einem Winkel von höchsten 15° zur Krümmungsebene oder sogar parallel zu dieser. Durch diese Ausrichtung wird eine Stabilisierung gegenüber Biegemomenten um die Schwingenachse erreicht, ähnlich wie oben bezüglich der Seitenabschnitte beschrieben.

Ein Verstärkungselement kann zum Beispiel als ebenes Blechteil ausgebildet sein. Es ist aber auch möglich, dass wenigstens ein Verstärkungselement ein Profil aufweist. Das heißt es kann als Profilteil ausgebildet sein. Hierdurch lässt sich seine stabilisierende Wirkung weiter verbessern. Insbesondere kann wenigstens ein Verstärkungselement ein U-Profil aufweisen. Auch kann die stabilisierende Wirkung des Verstärkungselements dadurch verbessert werden, dass es am Befestigungselement befestigt ist. Wenn wenigstens ein Verstärkungselement sowohl am Nadelkörper als auch am Befestigungselement befestigt ist, erfolgt eine wechselseitige Stabilisierung der drei Elemente.

Die Verbindungen der unterschiedlichen Elemente können in verschiedener Weise realisiert sein. So könnte eine wenigstens anteilig formschlüssige Verbindung genutzt werden, die mittels Schrauben oder Nieten realisierbar ist. Derartige Verbindungen können allerdings zu einer punktuellen Kraftübertragung führen, was nachteilig sein kann. Außerdem benötigen sie eine bestimmte geometrische Anordnung und Beschaffenheit der zu verbindenden Elemente, um effektiv anwendbar zu sein. Aus diesen sowie evtl. anderen Gründen kann es vorteilhaft sein, wenn wenigstens ein Verstärkungselement, das Führungselement und/oder das Befestigungselement stoffschlüssig mit dem Nadelkörper verbunden ist. Auch eine Verbindung zwischen zwei Verstärkungselementen und/oder eine Verbindung zwischen einem Verstärkungselement und dem Befestigungselement kann stoffschlüssig ausgebildet sein. Eine stoffschlüssige Verbindung kann sich linear oder auch flächig über einen ausgedehnten Bereich erstrecken, was eine verteilte Kraftübertragung ermöglicht, und kann prinzipiell bei beliebigen Kontaktbereichen zweier Elemente angewendet werden. Die stoffschlüssige Verbindung kann zum Beispiel durch Kleben oder Löten hergestellt sein, bevorzugt ist sie durch Verschweißen hergestellt. Diese sowie eventuell weitere optionale Schweißverbindungen beschränken sich allerdings auf einen vergleichsweise kleinen Bereich der Bindenadel. Sie bedeuten daher einen nur relativ geringen Eintrag von Wärme und führen daher allenfalls zu geringfügen thermischen Verformungen.

Durch die Erfindung wird des Weiteren eine Ballenpresse zur Verfügung gestellt, welche dazu eingerichtet ist, einen Erntegutballen in einem Presskanal zu formen und mit einem strangförmigen Bindemittel zu umhüllen, aufweisend eine Nadelschwinge mit einem Schwingenträger, an welchem wenigstens eine erfindungsgemäße Bindenadel befestigt ist.

Die genannte Begriffe wurden bereits mit Bezug auf die erfindungsgemäße Bindenadel erläutert. Bevorzugte Ausführungsformen der erfindungsgemäßen Ballenpresse entsprechen denen der erfindungsgemäßen Bindenadel.

Durch die Erfindung wird auch ein Verfahren zum Herstellen einer Bindenadel für eine Nadelschwinge einer Ballenpresse zur Verfügung gestellt, wobei die Bindenadel ein Befestigungselement zur Befestigung an einem Schwingenträger der Nadelschwinge aufweist, ein Führungselement zum wenigstens indirekten Führen eines strangförmigen Bindemittels, und einen Nadelkörper aus Metall, der sich vom Befestigungselement zum Führungselement erstreckt und wenigstens abschnittsweise bogenartig entlang einer Krümmungsebene verläuft, wodurch eine bogeninnere Innenseite und eine bogenäußere Außenseite der Bindenadel definiert sind.

Erfindungsgemäß wird ein Rohrprofil, welches einen Profilinnenraum definiert, verwendet, um den Nadelkörper wenigstens teilweise zu bilden. Die genannten Begriffe wurden bereits mit Bezug auf die erfindungsgemäße Bindenadel erläutert. Soweit diese nicht nachfolgend explizit genannt werden, entsprechen bevorzugte Ausführungsformen des erfindungsgemäßen Verfahrens denen der erfindungsgemäßen Bindenadel.

Es ist im Rahmen des Verfahrens möglich, dass das Rohrprofil bereits die exakte Form aufweist, die zur (wenigstens teilweisen) Bildung des Nadelkörpers vorgesehen ist. Eine bevorzugte Ausführungsform sieht hingegen vor, dass ein Umformen des Rohrprofils durchgeführt wird. Das heißt es wird ein Rohrprofil bereitgestellt, zum Beispiel durch Urformung, welches als Rohling oder Halbzeug bezeichnet werden kann. Dieses Rohrprofil wird dann umgeformt, um wenigstens einen Teil des Nadelkörpers auszubilden. Durch die Umformung können insbesondere der Querschnitt und/oder die Verlaufsrichtung des Rohrprofils verändert werden. Bevorzugt wird ein Kaltumformen des Rohrprofils durchgeführt. Dies kann sich insbesondere auf eine Umformung beziehen, die den Querschnitt verändert und/oder die die Verlaufsrichtung verändert. Als "Kaltumformen" wird in diesem Zusammenhang jede Umformung bezeichnet, die unterhalb der Rekristallisationstemperatur durchgeführt wird, in Bezug auf Stahl also insbesondere unterhalb von 600°C. Bevorzugt liegt die Temperatur allerdings deutlich darunter, zum Beispiel unter 150°C oder unter 100°C. Sie kann insbesondere bei Raumtemperatur liegen, also beispielsweise zwischen 10°C und 30°C. Sofern das Rohrprofil bei einer Kaltumformung eine höhere Temperatur aufweist, kann dies auf eine Erwärmung durch einen vorangehenden Umformungsschritt zurückzuführen sein. Auch in einem solchen Fall liegt die Temperatur normalerweise unter 100°C. Durch die Kaltumformung kann zum einen auf eine Erwärmung des Rohrprofils verzichtet werden, welche den Energieaufwand deutlich vergrößern würde. Vor allem führt eine Kaltumformung allerdings zu einer Kaltverfestigung des Rohrprofils. Hierdurch wird dessen Steifigkeit wesentlich verbessert. Grundsätzlich ist allerdings eine Warmumformung nicht ausgeschlossen. Falls diese erfolgt, wird vorteilhaft im Anschluss an die Warmumformung jedoch eine Vergütung durchgeführt, also eine gezielte, erzwungene Temperaturänderung des Rohrprofils, durch welche dessen Gefügestruktur beeinflusst werden kann.

Zum einen kann eine Umformung durchgeführt werden, um einen Querschnitt des Rohrprofils einzustellen, also diesen zu verändern. Die Veränderung des Querschnitts kann auf ganzer Länge des Rohrprofils oder lediglich in einem Teil desselben durchgeführt werden. Insbesondere kann ein Walzen des Rohrprofils durchgeführt werden, um den Querschnitt des Rohrprofils einzustellen. Dabei kann das Rohrprofil zwischen einem oder mehreren Paaren von angetriebenen Umformwalzen hindurchgeführt werden. Jedes Walzenpaar weist ein bestimmtes Profil auf, dessen Negativ dem Rohrprofil eingeformt wird. Im Falle einer Mehrzahl von Walzenpaaren kann die Umformung schrittweise erfolgen, so dass jede Einzelumformung weniger stark erfolgen muss. Der Querschnitt kann insbesondere durch Kaltumformung eingestellt werden, namentlich durch Kaltwalzen.

Bevorzugt wird ein Biegen, insbesondere ein Rollbiegen, des Rohrprofils durchgeführt, um dessen Verlauf entlang der Krümmungsebene einzustellen. Normalerweise ist der Querschnitt des Rohrprofils zu Beginn des Biegevorgangs bereits festgelegt, entweder aufgrund der Urformung des Rohrprofils oder aufgrund einer vorangegangenen Umformung, zum Beispiel des oben genannten Walzens. Zu diesem Zeitpunkt ist das Rohrprofil beispielsweise gerade, weist also keine Krümmung auf. Durch das Biegen wird der Verlauf des Rohrprofils verändert, so dass sich schließlich der bogenartige Verlauf entlang der Krümmungsebene ergibt. Es kann im gesamten Rohrprofil eine konstante Krümmung hergestellt werden, die Krümmung kann allerdings auch bereichsweise unterschiedlich sein. Es ist möglich, die Krümmung in ein oder mehreren Biegeschritten einzustellen. Es können unterschiedliche Biegeverfahren angewendet werden. Bevorzugt erfolgt ein Rollbiegen. Dabei wird das Rohrprofil gebogen, indem es zwischen rotierenden Rollen hindurchgeführt wird. Auch beim Biegen ist wiederum eine Kaltumformung bevorzugt.

Wie bereits oben erläutert, können das Führungselement und das Befestigungselement zum Beispiel durch Umformvorgänge am Nadelkörper angeformt werden. Andererseits können sie auch separat vorgefertigt werden. Eine bevorzugte Ausführungsform des Verfahrens sieht vor, dass das Führungselement, das Befestigungselement und/oder wenigstens ein Verstärkungselement am Nadelkörper befestigt wird, wobei das Verstärkungselement wenigstens teilweise an der Innenseite des Nadelkörpers angeordnet wird. Die Befestigung kann vorteilhaft durch eine stoffschlüssige Verbindung, insbesondere durch Verschweißen, erfolgen.

Die Erfindung ist für alle bekannten Knotersysteme verwendbar, das heißt insbesondere sowohl für Einfachknoter als auch für Doppelknoter.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer erfindungsgemäßen Ballenpresse in teilweiser Schnittdarstellung;
- Fig.2-4: Darstellungen einer erfindungsgemäßen Bindenadel;
- Fig.5: eine Explosionsdarstellung der Bindenadel aus Fig.2-4;
- Fig.6: eine perspektivische Darstellung einer Rollumformungsvorrichtung mit einem Nadelkörper der Bindenadel;
- Fig.7: eine perspektivische Darstellung einer Walzbiegevorrichtung mit dem Nadelkörper; sowie
- Fig.8: eine Schnittdarstellung des Nadelkörpers.

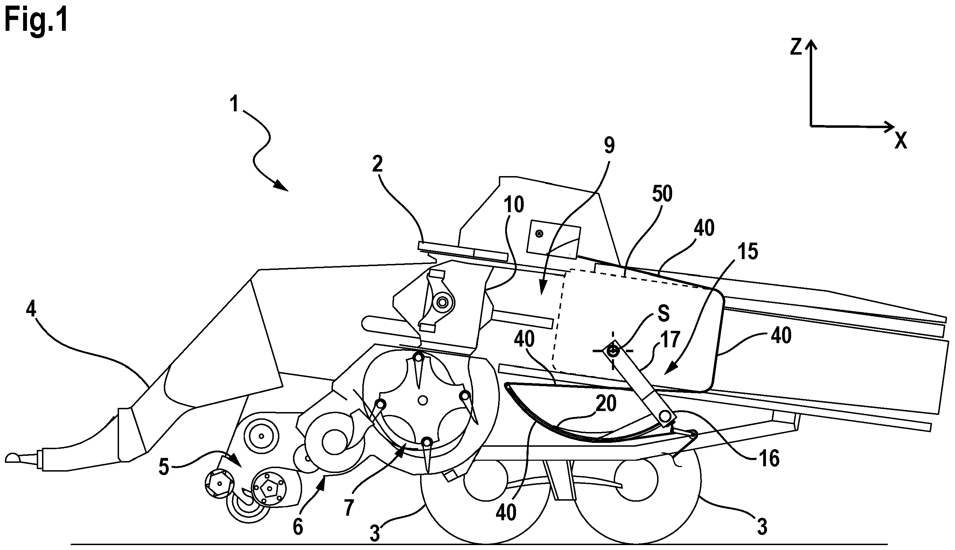

Fig. 1 zeigt eine Seitenansicht einer Schnittdarstellung einer erfindungsgemäßen Ballenpresse 1, genauer gesagt einer Quaderballenpresse. Hier und in den weiteren Figuren sind eine entgegen einer Fahrtrichtung nach hinten weisende Längsachse X, eine Querachse Y und eine Hochachse Z dargestellt. Die Darstellung ist vereinfacht und verschiedene Komponenten, die zum Verständnis der Erfindung nicht relevant sind, wurden weggelassen. Die Ballenpresse 1 weist einen Hauptrahmen 2 auf, der über ein Fahrwerk 3 am Boden abgestützt ist und der mit einer Deichsel 4 verbunden ist, mittels welcher die Ballenpresse 1 an ein Zugfahrzeug koppelbar ist. Die Erfindung ist ausdrücklich nicht auf gezogene oder getragene Ballenpressen beschränkt, sondern bezieht sich auch auf selbstfahrende Ballenpressen und stationäre Ballenpressen. Innerhalb des Hauptrahmens 2 ist ein Presskanal 9 definiert. Über eine Pick-up 5 wird Erntegut vom Boden aufgenommen und bei der hier dargestellten Ballenpresse 1 weiter über einen Schneidrotor 6 (welcher alternativ auch als Förderrotor ausgebildet sein kann oder auch entfallen kann) und eine Fördervorrichtung 7 dem Presskanals 9 zugeführt, in welchem ein (in Fig. 1 schematisch dargestellter) Quaderballen 50 sukzessive aus Portionen von Erntegut aufgebaut wird. Dabei wird das Erntegut im Presskanal 9 durch einen oszillierenden Presskolben 10 verdichtet.

Wenn der Quaderballen 50 seine vorbestimmte Größe erreicht hat, wird er mittels eines Bindemittels 40, zum Beispiel eines thermoplastischen Bandes oder eines Garns, zusammengebunden. Dabei werden eine Mehrzahl (zum Beispiel sechs) von Schleifen aus Bindemittel 40 um den Quaderballen 50 gelegt. Zur Bildung der jeweiligen Schleife wird ein Strangabschnitt eines Bindemittelstrangs mit einem zweiten Strangabschnitt verbunden, der zu diesem Zweck von unten durch den Presskanal 9 und weiter zu dessen Oberseite geführt wird. Dies geschieht mittels Bindenadeln 20, die Teil einer Nadelschwinge 15 sind. Die Nadelschwinge 15 ist in hier nicht näher erläuterter Weise um einen Schwingenachse S angetrieben schwenkbar, die parallel zur Querachse Y verläuft. Jede Bindenadel 20 ist an einem gemeinsamen Schwingenträger 16 der Nadelschwinge 15 befestigt, welcher wiederum über zwei Schwingenarme 17 mit der Schwingenachse S verbunden ist. Die Bindenadel 20 führt wie beschrieben einen Bindemittelstrang, welcher in Fig.1 nur teilweise dargestellt ist und nach und nach von einer nicht dargestellten Vorratsrolle abgerollt werden kann. Die Details des Bindevorgangs sind aus dem Stand der Technik bekannt und werden nicht weiter erläutert.

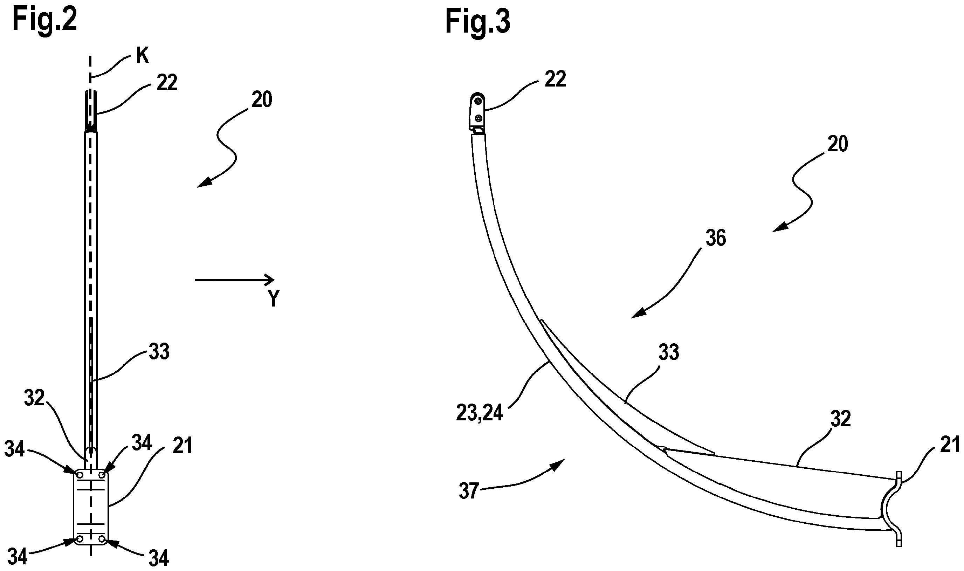

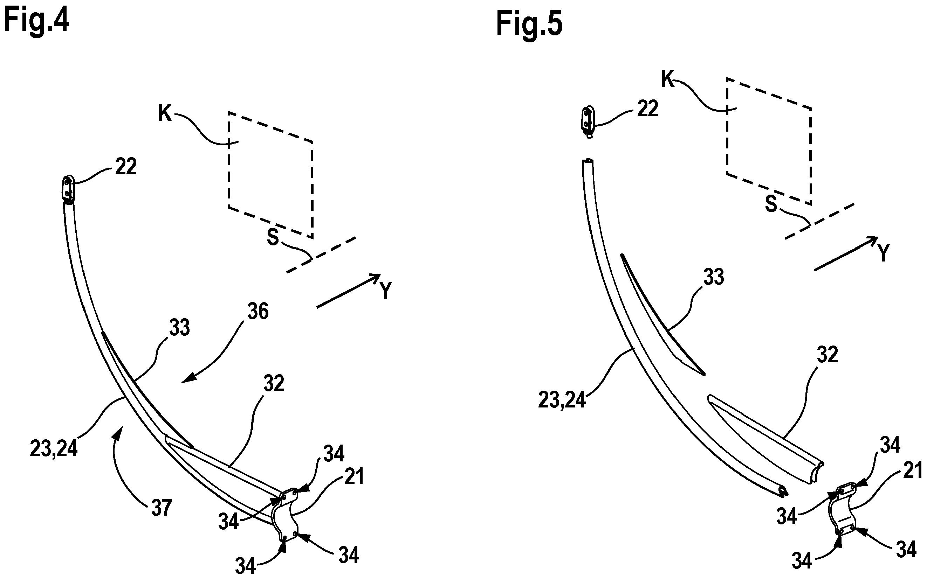

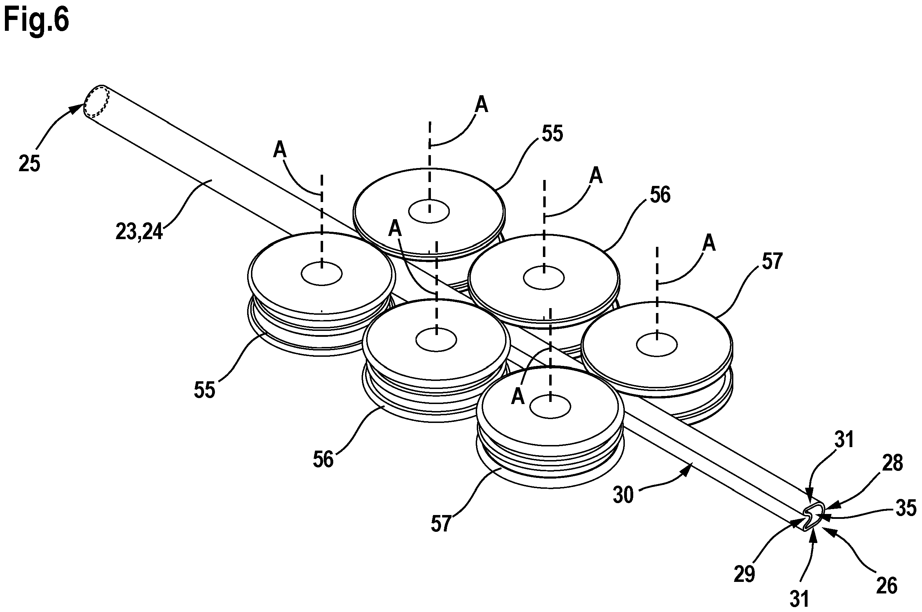

Fig. 2 - 4 zeigen eine einzelne Bindenadel 20, wobei Fig. 2 eine Ansicht mit Blickrichtung innerhalb der Längsebene der Ballenpresse 1 und somit senkrecht zur Querachse Y zeigt. Fig. 3 ist eine Ansicht mit Blickrichtung parallel zur Querachse Y und Fig. 4 ist eine perspektivische Ansicht. Fig. 5 ist eine Explosionsdarstellung, die verschiedene Einzelteile der Bindenadel 20 zeigt. Die Bindenadel 20 weist ein Befestigungselement 21 auf, welches auch als Nadelfuß bezeichnet werden kann und aus Stahlblech gefertigt ist. Es dient dazu, am Schwingenträger 16 befestigt zu werden und somit die Bindenadel 20 insgesamt zu sichern. Um die Befestigung zu ermöglichen, sind in diesem Fall vier Durchgangsbohrungen 34 vorgesehen, durch die Schrauben geführt werden können. An einem dem Befestigungselement 21 gegenüberliegenden Ende weist die Bindenadel 20 ein Führungselement 22 auf, welches als Rollenaufnahme für eine Führungsrolle dienen kann, über welche der Bindemittelstrang geführt wird. In diesem Beispiel ist das Führungselement einteilig aus Stahl gegossen. Das Befestigungselement 21 und das Führungselement 22 sind durch einen Nadelkörper 23 verbunden, der sich bogenartig entlang einer Krümmungsebene K erstreckt. Hierdurch sind eine bogeninnere Innenseite 36 und eine bogenäußere Außenseite 37 definiert. In diesem Beispiel ist die Krümmung des Nadelkörpers 23 entlang seiner gesamten Länge konstant, das heißt sein Verlauf entspricht einem Kreisbogen. Er ist aus einem Rohrprofil 24 aus Stahl gefertigt, das einen Profilinnenraum 35 (sichtbar in Fig.6) definiert, das heißt diesen umlaufend umschließt. Das Führungselement 22 ist mit dem Nadelkörper 23 verschweißt, wobei es teilweise in den Profilinnenraum 35 eingreift. Das Befestigungselement 21 ist mit dem Nadelkörper 23 verschweißt, wobei beide Elemente 21, 23 zusätzlich mit einem ersten Verstärkungselement 32 verschweißt sind. Das erste Verstärkungselement 32 ist aus Stahlblech gefertigt und weist ein U-Profil auf. Es ist auf der Innenseite 36 des Nadelkörpers 23 angeordnet. Weiterhin ist ein zweites Verstärkungselement 33, das als ebenes Stahlblech ausgebildet ist, auf der Innenseite 36 des Nadelkörpers 23 mit diesem sowie mit dem ersten Verstärkungselement 32 verschweißt. Die Verstärkungselemente 32, 33 sind so zugeschnitten, dass Ihre Form zu der des Nadelkörpers 23 und des Befestigungselements 21 passt.

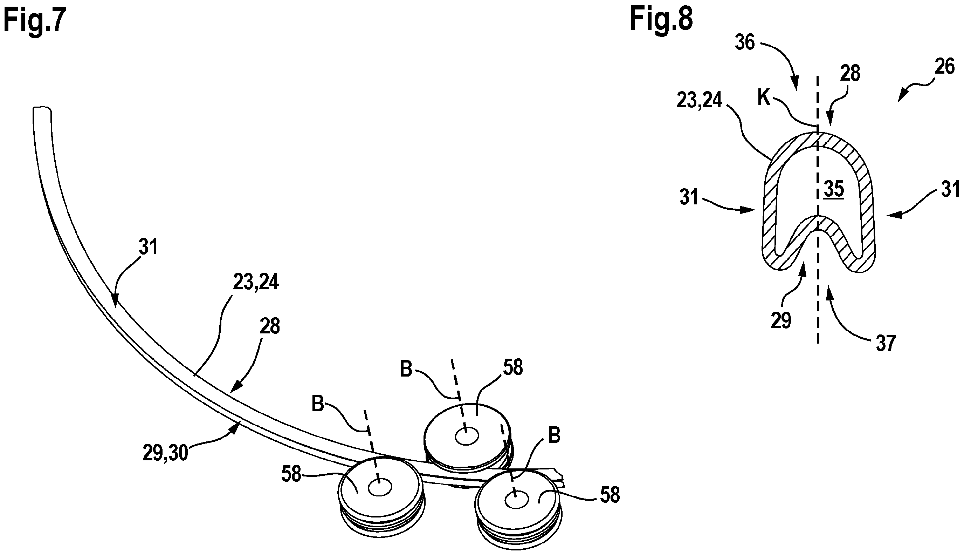

Das Rohrprofil 24 des Nadelkörpers 23, dessen Querschnitt 26 in Fig.8 dargestellt ist, weist auf der Außenseite 37 einen im Querschnitt konkaven Aufnahmeabschnitt 29 auf. Der Aufnahmeabschnitt 29 bildet eine Aufnahmerinne 30, in welcher ein Strangabschnitt des Bindemittels 40 zeitweise aufgenommen werden kann. Auf der gegenüberliegenden Innenseite 36 ist ein konvexer Rückenabschnitt 28 ausgebildet. Der Rückenabschnitt 28 und der Aufnahmeabschnitt 29 bilden gewissermaßen ein doppeltes U-Profil, welches zur strukturellen Stabilisierung des Nadelkörpers 23 beiträgt. Sie sind durch zwei Seitenabschnitte 31 verbunden, die einander quer zur Krümmungsebene K gegenüberliegen und in diesem Beispiel um ca. 5° gegenüber der Krümmungsebene K geneigt sind. Sie bewirken vor allen Dingen eine Stabilisierung des Nadelkörpers 23 gegenüber Biegemomenten um die Schwingenachse S.

Das Rohrprofil 24 wird aus einem einstückig gefertigten Halbzeug hergestellt, welches anfänglich einen kreisförmigen Querschnitt 25 aufweist und geradlinig ausgebildet ist. Alternativ könnte das Halbzeug anfangs auch einen anderen, zum Beispiel einen viereckigen, insbesondere rechteckigen oder quadratischen Querschnitt aufweisen. Dieses Halbzeug wird durch Kaltumformung bearbeitet, wobei in einem ersten Bearbeitungsschritt, wie in Fig. 6 dargestellt, ein Walzen des Rohrprofils 24 durchgeführt wird, um den Querschnitt 26 einzustellen. Dabei durchläuft das Rohrprofil 24 in diesem Ausführungsbeispiel nacheinander ein Paar von ersten Walzen 55, ein Paar von zweiten Walzen 56 sowie ein Paar von dritten Walzen 57, die jeweils um zueinander parallele Walzenachsen A drehbar sind. Es könnten alternativ auch mehr oder weniger als drei Walzenpaare eingesetzt werden. Zwischen jedem Paar von Walzen 55, 56, 57 erfolgt durch die profilierte Mantelfläche der jeweiligen Walze 55, 56, 57 eine stufenweise Umformung des Rohrprofils 24, wodurch der kreisförmige Querschnitt 25 nach und nach in den in Fig. 8 gezeigten Querschnitt 26 übergeht. Die Umformung wird als Kaltumformung bei Raumtemperatur durchgeführt, wobei jeder Umformungsschritt allerdings zu einer gewissen Erwärmung des Rohrprofils 24 führt. Dennoch liegt auch beim dritten Umformungsschritt die Temperatur weit unter der Rekristallisationstemperatur. Aufgrund der Kaltverformung kommt es zu einer Kaltverfestigung, welche die Steifigkeit des Rohrprofils 24 nochmals verbessert.

In einem weiteren Bearbeitungsschritt, der in Fig. 7 dargestellt ist, erfolgt ein Rollbiegen des Rohrprofils 24. Dabei wird das Rohrprofil 24 zwischen drei Rollen 58 hindurchgeführt, die um Rollenachsen B drehbar sind. Sie sind derart zueinander versetzt, dass dem Rohrprofil 24 eine Krümmung eingeprägt wird. Die Krümmung kann in einem einzigen Umformschritt eingestellt werden. Alternativ wäre es auch möglich, diese in mehreren Schritten einzustellen, wobei der Versatz der Rollen 58 jeweils verändert wird, so dass sich eine stärkere Krümmung ergibt. Die Mantelflächen der Rollen 58 sind so angepasst, dass der zuvor eingestellte Querschnitt 26 nicht oder nur unwesentlich verändert wird. Auch das Rollbiegen erfolgt als Kaltumformung, so dass die zuvor erfolgte Kaltverfestigung erhalten bleibt und normalerweise noch verstärkt wird.

Alternativ ist es auch möglich, das Walzen des Rohrprofils 24 und das Rollbiegen in einem kombinierten Fertigungsschritt durchzuführen, zum Beispiel derart, dass das Rohrprofil 24 unmittelbar nacheinander die Walzen 55, 56, 57 und die Rollen 58 durchläuft.

## Patentansprüche

1. Bindenadel (20) für eine Nadelschwinge (15) einer Ballenpresse (1), wobei die Bindenadel (20) ein Befestigungselement (21) zur Befestigung an einem Schwingenträger (16) der Nadelschwinge (15) aufweist, ein Führungselement (22) zum wenigstens indirekten Führen eines strangförmigen Bindemittels (40), und einen Nadelkörper (23) aus Metall, der sich vom Befestigungselement (21) zum Führungselement (22) erstreckt und wenigstens abschnittsweise bogenartig entlang einer Krümmungsebene (K) verläuft, wodurch eine bogeninnere Innenseite (36) und eine bogenäußere Außenseite (37) der Bindenadel (20) definiert sind,
**dadurch gekennzeichnet, dass**
der Nadelkörper (23) wenigstens teilweise durch ein Rohrprofil (24) gebildet ist, welches einen Profilinnenraum (35) definiert.

2. Bindenadel nach Anspruch 1, **dadurch gekennzeichnet, dass** der Nadelkörper (23) vollständig durch das Rohrprofil (24) gebildet ist.

3. Bindenadel nach einem der vorherigen Ansprüche, **dadurch gekennzeichnet, dass** das Rohrprofil (24) wenigstens abschnittsweise an der Außenseite (37) einen im Querschnitt konkaven Aufnahmeabschnitt (29) aufweist, welcher eine außenseitige Aufnahmerinne (30) für Bindemittel (40) definiert.

4. Bindenadel nach einem der vorherigen Ansprüche, **dadurch gekennzeichnet, dass** das Rohrprofil (24) wenigstens abschnittsweise an der Innenseite (36) einen im Querschnitt konvexen Rückenabschnitt (28) aufweist.

5. Bindenadel nach einem der vorherigen Ansprüche, **dadurch gekennzeichnet, dass** das Rohrprofil (24) zwei einander quer zur Krümmungsebene (K) gegenüberliegende (31) Seitenabschnitte aufweist, von denen jeder in einem Winkel von höchstens 15° zur Krümmungsebene (K) verläuft.

6. Bindenadel nach einem der vorherigen Ansprüche, **dadurch gekennzeichnet, dass** das Führungselement (22) und/oder das Befestigungselement (21) separat vom Nadelkörper (23) gefertigt und an diesem befestigt sind.

7. Bindenadel nach einem der vorherigen Ansprüche, **dadurch gekennzeichnet, dass** die Bindenadel (20) wenigstens ein Verstärkungselement (32, 33) aufweist, welches am Nadelkörper (23) befestigt ist und wenigstens teilweise an dessen Innenseite (36) angeordnet ist.

8. Bindenadel nach einem der vorherigen Ansprüche, **dadurch gekennzeichnet, dass** wenigstens ein Verstärkungselement (32, 33) als Profilteil ausgebildet ist und/oder am Befestigungselement (21) befestigt ist.

9. Bindenadel nach einem der vorherigen Ansprüche, **dadurch gekennzeichnet, dass** wenigstens ein Verstärkungselement (32, 33), das Führungselement (22) und/oder das Befestigungselement (21) stoffschlüssig mit dem Nadelkörper (23) verbunden ist

10. Ballenpresse (1), welche dazu eingerichtet ist, einen Erntegutballen (50) in einem Presskanal (9) zu formen und mit einem strangförmigen Bindemittel (40) zu umhüllen, aufweisend eine Nadelschwinge (15) mit einem Schwingenträger (16), an welchem wenigstens eine Bindenadel (20) nach einem der vorherigen Ansprüche befestigt ist.

11. Verfahren zum Herstellen einer Bindenadel (20) für eine Nadelschwinge (15) einer Ballenpresse (1), wobei die Bindenadel (20) ein Befestigungselement (21) zur Befestigung an einem Schwingenträger (16) der Nadelschwinge (15) aufweist, ein Führungselement (22) zum wenigstens indirekten Führen eines strangförmigen Bindemittels (40), und einen Nadelkörper (23) aus Metall, der sich vom Befestigungselement (21) zum Führungselement (22) erstreckt und wenigstens abschnittsweise bogenartig entlang einer Krümmungsebene (K) verläuft, wodurch eine bogeninnere Innenseite (36) und eine bogenäußere Außenseite (37) der Bindenadel (20) definiert sind,
**dadurch gekennzeichnet, dass**
ein Rohrprofil (24), welches einen Profilinnenraum (35) definiert, verwendet wird, um den Nadelkörper (23) wenigstens teilweise zu bilden.

12. Verfahren nach Anspruch 11, **dadurch gekennzeichnet, dass** ein Umformen, insbesondere ein Kaltumformen, des Rohrprofils (24) durchgeführt wird.

13. Verfahren nach einem der Ansprüche 11 oder 12, **dadurch gekennzeichnet, dass** ein Walzen des Rohrprofils (24) durchgeführt wird, um einen Querschnitt (26) des Rohrprofils (24) einzustellen.

14. Verfahren nach einem der Ansprüche 11 bis 13, **dadurch gekennzeichnet, dass** ein Biegen, insbesondere ein Rollbiegen, des Rohrprofils (24) durchgeführt wird, um dessen Verlauf entlang der Krümmungsebene (K) einzustellen.

15. Verfahren nach einem der Ansprüche 11 bis 14, **dadurch gekennzeichnet, dass** das Führungselement (22), das Befestigungselement (21) und/oder wenigstens ein Verstärkungselement (32, 33) am Nadelkörper (23) befestigt wird, wobei das Verstärkungselement (32, 33) wenigstens teilweise an der Innenseite (36) des Nadelkörpers (23) angeordnet wird.
